# EUROPEAN PATENT APPLICATION

(11) **EP 0 669 373 A1**
(43) Date of publication of application: **30.08.1995**
(21) Application number: 94200513.3
(22) Date of filing: 28.02.1994
(51) Int. Cl.: C08L 67/00, C09K 3/10

(54) **Use of a binder composition in the preparation of sealing compounds for closure systems for jars and bottles**

(71) Applicant: DSM N.V., NL-6411 TE Heerlen (NL)
(72) Inventor: Westerhof, Wilhelmina, NL-8023 AA Zwolle (NL); Grisnich, Willem, NL-7412 ED Deventer (NL)

(57) **Abstract**

The invention relates to the use of a binder composition in the preparation of sealing compounds for closure systems for glass jars and bottles. The binder composition comprises a polyester and a crosslinker that contains epoxy groups.

The polyester can be a carboxyl functional polyester having an acid value between 20 and 600 and having a molecular weight (Mn) between 300 and 6000. The crosslinker can be a bisphenol-A-epoxide or an epoxyfunctional crosslinker comprising at least one C₅ to C₂₆ aliphatic chain.

## Description

The invention relates to the use of a binder composition in the preparation of sealing compounds for closure systems for jars and bottles.

Jars and bottles, which are often glass jars and bottles, come in many sizes and shapes. They may be closed and sealed in a variety of ways. The closure's main function is to hold the product in the glass jars and bottles and to provide an easy means of opening and sometimes reclosing the glass jar or the bottle. Some glass jars and bottles require a seal that will prevent liquid products from leaking and air from contaminating the prodcut. In "Packaging Technology" (August/September 1982, pages 16-22) a review of the basic closures and the methods used for applying them is disclosed. Four types of closures frequently used are for example caps, plugs, fitments and innerseals. Caps may be described by the ways in which they are fastened to the bottle. The many variations in their style and construction make caps appropriate for many different sizes, and shapes of bottles and types of products. Special characteristics can be added to the cap designs to make them clidproof, tamper evident, product dispersing, or easy to open. A screw cap is held on the bottle by threads in the cap. These threads engage similar threads on the neck of the bottles. Screw caps are frequently made of metal or plastic lug caps are similar to screw caps except the lugs formed on the side of the cap are positioned under projections on the container neck. The lug cap is released or applied by making less than a one-quarter turn. The screw cap requires one or more complete turns for application or removal. Lug caps are normally made of metal, and can be used for glass containers that are vacuum sealed, because of their strength and ease of opening.

The binder compositions for the closures, must be approved for direct food contact. An important function of the sealing compound is to protect the packed product to maintain its nutritional value, texture, color and flavor when purchased and used by the consumer. To meet these requirements, the organic sealing compound must be free of any material which might extract into the packed product and must maintain its integrity over the product recommended shelf life. On the whole, current commercial sealing compounds for these closures, have met all these performance criteria. The sealing compound is often based on plasticized polyvinylchloride (PVC), so called polyvinylchloride plastisol.

The article "PVC in container coatings and approaches to its replacement" by M. Hickling (Polymeric Materials Science and Engineering, Volume 65, American Chemical Socienty Fall Meeting 1991, New York, pages 285-286) elucidates that there exists a need for PVC replacement by other resins.

The performance offered by PVC coatings is somewhat offset by the fact that unstabilized PVC degrades above 100 _{°} C by elimination of HCI. The release of HCI can initiate corrosion reactions particularly on steel substrates. Hence, great care is needed in PVC plastisol formulation to ensure fineness of grind and adequate thermal stabilization. This degradation has caused complications in recycled and incineration of PVC containing waste. The chlorine content of steel recovered from such waste has been considered too high for many uses, but the amount of steel recovered in this way is rarely high enough to be significant. The polyenes produced also undergo secondary reactions in which it is possible to produce aromatic groups. These may generate dioxins whose presence can be detected in the emissions from incinerators burning PVC containing materials. The most dramatic reaction to this has been in Holland where it was claimed that the detection of dioxins in milk sold through supermarkets resulted from contamination of cattle grazing land by a waste incinerator. This claim led to demands by environmental groups (supported by supermarkets in Holland and Germany and later by major food and beverage packers) for the removal of PVC from packaging.

The aim is to remove PVC from sealing compounds for glass jars and bottle closures such as for example screw caps, twist off caps and lug caps.

It is the object of the present invention to provide a binder composition which can be used to replace PVC containing compositions in the preparation of sealing compounds for closure systems for jars and bottles.

These compositions have particularly to meet requirements relating to for example sterilization and pasteurization properties, the absence of solvent in the composition, the approval for foodap- plications of the binder compositions and good adhesion on the adhesive lacquer.

The sealing compounds are essential in meeting the vital requirement of a total hermetic seal in all forms of packaging. The demands on compounds are diverse. For example, it must be guaranteed that under no circumstances the products packed could be contaminated either biologically or chemically. Even under adverse conditions the contents must remain hermetically sealed in the container. The sealing compound must be resistant to products packed and should not be detrimental to the quality of the contents. The process and processing have to provide for a high manufacture output. The sealing properties have to be maintained for long periods of time and without any significant ageing.

The invention is characterized in that the binder composition comprises a polyester and a crosslinker that contains epoxy groups.

These compositions result in sealing compounds for use in jars and bottles closures having an excellent behaviour with respect to said requirements and in sealing compounds which withstand the impact of superheated steam on closing and to offer opening to torgues within the specification tolerances.

Preferably the composition is substantially solvent free.

The viscosity may range from pourable liquids to heavy pastes.

Preferably, the polyester is a carboxylfunctional polyester.

Suitable polyesters according to the invention may have an acid value between 20 and 600, preferably between 100 and 300 mg KOH/gram resin.

The molecular weight (Mn) may range between 300 and 6000 (determined by gel permeation chromatography (GPC); polystyrene standard).

The glass transition temperature of the polyester may range for example between -60 _{°} C and 10_{°}C.

A carboxyl-functional polyester can be obtained by causing polyalcohols to react with acids or acid anhydrides by choosing a certain molar ratio of the polyalcohols and the acids or acid anhydrides. This ratio may vary for example between 1:2 and 1:1 for the preparation of the carboxyl functional polyester.

Suitable polyalcohols for the preparation of the polyester include, for example, ethylene glycol, propylene glycol (1,2), dipropylene glycol, tripropylene glycol, propylene glycol (1,3), methylpropylene glycol 1,3, diethylene glycol, triethylene glycol, butanediol (1,2), butanediol (1,3), butanediol (1,4), hexanediol (1,6), neopentyl glycol, 2,2,4 trimethylpentanediol (1,3), ester of hydroxypivalic neopentyl glycol, cyclohexanedimethanol, bisphenol-A-bishydroxyethyl ether, trimethylolpropane and/or pentaerythritol.

Suitable acids for the preparation of the polyesters include, for example, isophthalic acid, terephthalic acid (dimethylester of terephthalic acid or isophtalic acid), adipic acid, fumaric acid, sebacic acid, hexahydroterephthalic acid, decanedicarboxylic acid, azelaic acid, 5-t-butylisophthalic acid and/or dimerised fatty acids or acid anhydrides such as phthalic anhydride, tetrahydrophthalic anhydride, succinic anhydride, maleic anhydride, trimellitic anhydride, pyromellitic anhydride and/or hexahydrophthalic anhydride.

The esterification reaction is preferably carried out in a nitrogen atmosphere at temperatures of between 180°C and 260 °C. Catalysts such as dibutyltin oxide, tinchloride or tetrabutoxy titanate, and antioxidants such as triphenyl phosphite may be used as additives. The reaction water released during the reaction is removed by distillation. The desired degree of esterification is reached by means of azeotropic distillation or vacuum in the last phase.

Suitable crosslinkers containing epoxy groups include for example bisphenol-A-epoxy compounds, hydrogenated bisphenol-A-epoxy compounds, aliphatic epoxy compounds, epoxidized alkyd resins, epoxydized fatty borates, di-, tri-, and oligoesters of polyalcohols such as glycerol, trimethylpropane, pentaerytritol, dipentaerytritol and unsaturated fatty acids, and/or tris- glycidylisocyanurate (TGIC).

According to a preferred embodiment of the invention the crosslinker is a bisphenol-A-epoxide or an aliphatic epoxy compound comprising at least one C₅ to C₂₆ aliphatic chain.

Suitable bisphenol-A-epoxides are for example the various Epikote@ types.

Another suitable epoxy-functional crosslinker comprises at least one C₅ to C₂₆ aliphatic chain provided that the epoxy functionality is carried on the aliphatic chain. The aliphatic chains can be linear or branched. The aliphatic chains carrying the epoxy functionality are preferably linear. The epoxy functional crosslinker can also comprise several aliphatic chains at least one of which carries epoxy functionality wherein the chains are linked via ester, amide, urethane or ether groups. As evident, it is not required that each chain carries an epoxy group. The epoxy functionality is greater than 1, preferably greater than 2.

Preferably, the aliphatic chain contains 6 or more and in particular 12 or more carbon atoms. Preferably the aliphatic chain contains 22 or less carbon atoms.

The oxirane oxygen content of the crosslinker in general is higher than 1 wt.%, preferably higher than 2 wt.% In general the oxirane oxygen content of the crosslinker will be lower than 20 wt.%, in practice mostly lower than 15 wt.%.

The crosslinker preferably comprises an aliphatic ester carrying an epoxy group. When the crosslinker comprises aliphatic esters, the C₅ to C₂₆ aliphatic chains of the crosslinker are linked via ester groups. Exemplary esters include the methyl ester of linoleic acid, the tert.-butyl ester of linolenic acid, and epoxidized oil.

Examples of these crosslinkers are epoxidized oils wherein the oil is linseed oil, soybean oil, safflower oil, oiticica oil, caraway seed oil, rapeseed oil, castor oil, dehydrated castor oil, cotton seed oil, wood oil, vernonia oil (a natural oil), sunflower oil, peanut oil, olive oil, soybean leaf oil, maize oil, fish oil such as, for example, herring or sardine oil, and non-cyclic terpene oils.

The epoxidized oil is preferably epoxidized soybean oil and/or epoxidized linseed oil.

The binder composition according the invention preferably includes a small but effective amount of catalyst for the reaction between the polyester and the crosslinker.

Suitable catalysts are listed in Madec et al., Kinetics and Mechanisms of Polyesterifications, Advances in Polymer Science, 182-198 (1985), the complete disclosure of which is incorporated herein by reference, can, in principle, be used.

Examples of suitable classes of catalysts are N-dialkylamine pyridines, tertiary amines, imidazole derivatives, guanidines and cyclic amine compounds. If desired, the catalysts may be blocked. Specific examples of catalysts include N-dimethylamino pyridine, benzotriazole, triethylamine or triphenylamine, 4,5-diphenyl imidazole, 1-ethyl imidazole, 2-methyl imidazole, 4-methyl imidazole, ethyl imidazole carboxylate, 5,6-dimethyl benzimidazole, 1-benzyl imidazole, imidazole or 1,1-carbonyl diimidazole, benzyl- trimethylammoniumchloride, cholinechloride, trifenylethylfosfoniumbromide, tetramethyl guanidine (TMG), isocyanate-TMG adducts (e.g., isophorone diisocyanate-di-tetramethyl guanidine, tolonate-HDT-tetramethyl guanidine, or TMXDldiTMG), acetyl-TMG, 2-phenyl-1,1,3,3-tetramethyl guanidine, 1,5-diazabicyc!o[4,3,0]non-5- ene and 1,5,7-triazabicyclo[4,4,0]dec-5-ene. Other catalysts include tetraalkyl phosphonium bromide, tetrabutyl ammonium fluoride, cetyl triethyl ammonium bromide and benzothiazole.

According to a preferred embodiment of the invention the catalyst is a salt of a carboxylic acid or an alcohol or a metalhydroxyde. The acid can be a saturated aliphatic mono- or dicarboxylic acid or a saturated aromatic carboxylic acid. The acid may contain 3-25 carbon atoms. Suitable acids include for example decanoic acid, octanoic acid, stearic acid, lauric acid or benzoic acid. The salt can be based for example on one of the elements chosen from lithium, sodium, potassium, cesium, magnesium and calcium.

Very suitable catalysts include sodium stearate, lithium stearate, sodium benzodate, lithium benzoate, sodium laurate, lithium laurate, sodium octanoate and lithium octanoate.

Other suitable lithium derivatives include lithium alkanolate such as for example lithium butanolate, lithiumtriazole, lithiumimidazole and lithium hydroxide.

The weight ratio carboxylic groups of the polyester : epoxygroups of the crosslinker is generally between 100:50 and 100:300.

The amount of catalyst is generally between 0,01 and 5% by weight relative to the binder composition.

As additives for example stabilizers, plasticizers, fillers, pigments, flow agents and lubricants can be used.

Suitable plasticizers include for example phtalates, sebacates and adipates in amounts between, for example, 2 and 50% by weight.

The binder composition of the present invention can, if desired, be supplied as a single component system. In a single component system a large part or all of the polyester and substantially all of the crosslinker are supplied as a mixture.

A single component binder system can be obtained by mixing the crosslinker with the polymer at a temperature below 70 °C to form a homogenous mixture. A sealing compound can be prepared by mixing the binder composition with a catalyst and, optionally, a pigment, plasticizers, filler and other additives and optionally additional curing agents at a temperature of for example between 20 ° C and 70 ° C.

Instead of using the binder system as a single component, the various ingredients of the binder composition can also be mixed with the other ingredients of the compound during the preparation of the compound.

The catalyst and additives also can be added either to the polymer or to the crosslinker.

The catalyst and/or the curing agent can also be added during compound preparation, together with the plasticizer, pigments and the fillers.

The catalyst and additives can, if desired, be applied as a masterbatch. Such a masterbatch can be a mixture of the polymer resin that is also used for the binder composition or another - not reactive - resin with the catalyst and optionally all or a part of the additives.

A two-component (or two-package) system for the preparation of the compound comprises a first component consisting essentially of all or a large part of the polyester and the crosslinker, and a second component consisting essentially of the polyester and a catalyst for the curing reaction between the polymer and the crosslinker (masterbatch).

The binder composition according to the invention can for example be applied by a nozzle lining process. The binder composition is injected into the channel located in the lug caps perimeter and must be able to flow into the overlapping section. The binder composition can be preheated before injection.

The composition can for example be cured at temperatures between 180 and 260 _{°} C during 1-20 minutes.

The composition according to the invention can also be used for the provision of abrasion and corrosion inhibiting coatings for steel substrates, for the provision of coil coatings, for the provision of sealing gaskets for caps and closures of containers for the provision of interior coatings of metal containers or for underbodycoatings.

## Claims

1. Use of a binder composition in the preparation of sealing compounds for closure systems for jars and bottles characterized in that the binder composition comprises a polyester and a crosslinker that contains epoxy groups.

2. Use of a binder composition according to claim 1, characterized in that the polyester is a carboxyl functional polyester having an acid value between 20 and 600 and a molecular weight (Mn) between 300 and 6000.

3. Use of a binder composition according to any one of claims 1-2, characterized in that the crosslinker is a bisphenol-A-epoxide or an epoxyfunctional crosslinker comprising at least one C₅ to C₂₆ aliphatic chain.

4. Use of a binder composition according to any one of claims 1-3, characterized in that the composition contains 0,01-5% by weight of a catalyst.

5. Use of a binder composition according to any one of claims 1-4, characterized in that the composition is solvent-free.

6. A sealing compound for closure systems for jars and bottles based on a binder composition according to any one of claims 1-5 and additives.

7. A closure for jars and bottles coated with a compound according to claim 6.

8. A process for the preparation of a sealing compound for closure systems for jars and bottles characterized in that the binder composition according to any one of claims 1-5 is cured at a temperature between 180°C and 260 _{°} C during 1-20 minutes.
